Europäisches Patentamt

European Patent Office

Office européen des brevets

(19)

(11) Publication number: **0 065 331**
**B1**

(12) **EUROPEAN PATENT SPECIFICATION**

(45) Date of publication of patent specification: **13.08.86**

(51) Int. Cl.⁴: **F 16 D 3/21**

(21) Application number: **82200531.0**

(22) Date of filing: **04.05.82**

(54) Homokinetic coupling.

(30) Priority: **14.05.81 NL 8102379**

(43) Date of publication of application:
**24.11.82 Bulletin 82/47**

(45) Publication of the grant of the patent:
**13.08.86 Bulletin 86/33**

(84) Designated Contracting States:
**DE FR GB IT NL SE**

(56) References cited:
**EP-A-0 016 489**
**CH-A- 379 207**
**FR-A-1 004 153**
**GB-A- 770 186**
**US-A-1 622 425**
**US-A-2 902 844**
**US-A-3 357 209**
**US-A-4 114 404**

(73) Proprietor: **SKF Industrial Trading &
Development Company B.V.
Kelvinbaan 16 P.O. Box 50
NL-3430 AB Nieuwegein (NL)**

(72) Inventor: **Kumpar, Zvonimir Zvonko
Fröbellaan 46
NL-3706 TH Zeist (NL)**

(74) Representative: **Merkelbach, B.
SKF Engineering & Research Centre B.V.
Kelvinbaan 16 P.O. Box 50
NL-3430 AB Nieuwegein (NL)**

Courier Press, Leamington Spa, England.

## Description

The invention concerns a homokinetic coupling comprising a housing or outer ring having a cavity limited by a spherical surface and open toward the outside at least at one end, and an inner ring, placed within this cavity, having an outer surface formed by a spherical surface, and a set of balls, flattened on one side, each of which is accommodated at the flattened side, in a respective axially extending groove formed in the spherical surface of the inner ring, the bottoms of the grooves forming a sliding surface along which the balls are capable of sliding on their flattened side, the other spherical side of each ball being partially and movably accommodated in a respective recess forming a part of the housing. Such a homokinetic coupling is disclosed in NL—A—7902092, corresponding to EP—A—16.489.

In the known homokinetic coupling the recesses of the housing for accommodating the balls are formed by grooves, extending in axial direction, formed in the spherical surface of the cavity of said housing, these grooves as well as the grooves in the inner ring becoming deeper toward the open side of the cavity for the optimal transfer of torque at various angles between the axes of symmetry of the inner and outer rings. At the same time a retaining ring provided with springy elements is attached to the inner ring and a retaining ring is fitted on the housing about the open side of the cavity to prevent the balls from falling out of the grooves.

The manufacturing costs of this homokinetic coupling are comparatively high, owing to the fact that the grooves must have a specific shape, in particular, must be formed becoming deeper. The object of the invention is to provide a homokinetic coupling of the type mentioned which can be manufactured at lower costs.

This object is accomplished in that according to the invention each recess is formed in a respective ball-shaped element which is pivotably accommodated in the housing. In this way grooves need to be formed only in the inner ring, while no separate retaining means is necessary to prevent the balls from falling out of the housing. The self-adjusting action is at the same time obtained by virtue of the fact that the ball-shaped elements adjust themselves for the optimal transfer of torque at various angles between the axes of symmetry of the inner and outer rings.

Each ball-shaped element is preferably pivotably accommodated in an opening in the housing and the grooves in the inner ring have a constant depth. The recesses in the ball-shaped elements are advantageously tapered.

For facilitating assembly of the coupling pursuant to the invention each ball-shaped element is accommodated in a round through opening formed by two half round openings adjacent to one another, the one half of which being formed in a first part of the housing and the other half being formed in a retaining part of the housing, the retaining part being connected with the first part of the housing, the ball-shaped elements being retained in the round opening by a covering ring.

It is noted that the British patent 1088615 discloses a homokinetic coupling comprising rolling members each of which being provided with a recess wherein a portion of a projecting cam is accommodated and which is mounted in the bottom of a groove. These rolling members however are polygonal shaped and many-sided enclosed, thus very limited in their movements.

The invention is described in greater detail with reference to the drawing, in which

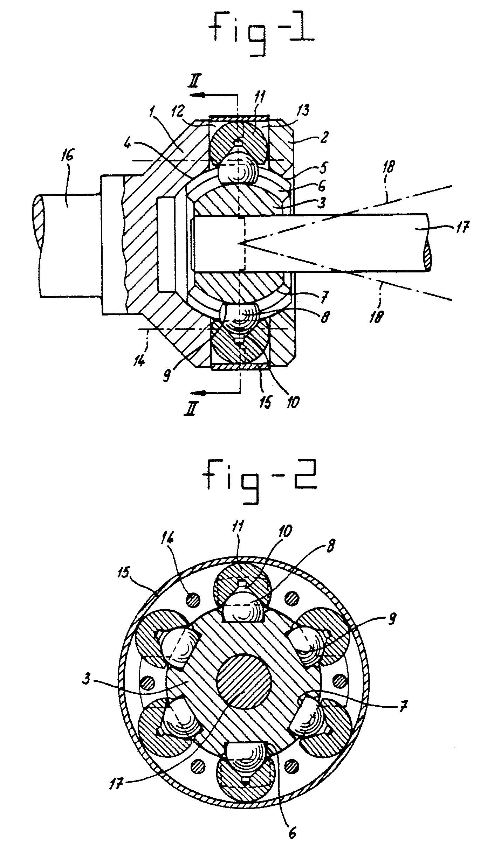

Fig. 1 represents a homokinetic coupling pursuant to the invention in axial cross-section, and

Fig. 2 is a cross-section along line II—II of Fig. 1.

As shown in the drawing, the coupling comprises a housing or outer ring 1 with a retaining part 2, and an inner ring 3 placed within the housing 1, 2. The housing 1, 2 encloses a cavity having a spherical outer surface 5. In the spherical outer surface 5 of the inner ring 3 are made grooves 6 of constant depth, extending axially, the bottom 7 of which forms a cylindrical surface.

A set of balls 8 having a flattened side 9 is partially accommodated in the grooves 6, so that these balls 8 are in line contact with the rolling surfaces formed by the bottoms of the grooves 6. At the other spherical side the balls 8 are partially and movably accommodated in tapered recesses 10 which are formed in ball-shaped elements 11. The ball-shaped elements 11 lie in round through openings formed by two half round openings. One half round opening 12 is formed in the housing 1, and the other half round opening 13 in the retaining part 2. The retaining part 2 is connected with the housing 1 by means of connecting elements 14, where a ring 15 covering the openings 12, 13 is mounted.

The housing 1, 2 is provided with a shaft 16, while the shaft 17 is attached on the inner ring 3, which shaft 17 is capable of swinging toward all sides in relation to the shaft 16, as indicated by the broken lines 18, which indicate the outermost positions of the center line of the shaft 17 in the plane of drawing, which positions may include an angle of $\pm 40°$. At the same time, the ball-shaped elements 11 always adjust themselves such that the torque of, for example, the shaft 17 is always optimally transferred to the shaft 16.

## Claims

1. Homokinetic coupling comprising a housing or outer ring (1, 2) having a cavity limited by a spherical surface (5) and open toward the outside at least at one end, and an inner ring (3), placed within this cavity, having an outer surface formed by a spherical surface, and a set of balls (8), flattened on one side (9), each of which is accommodated at the flattened side (9) in a respective axially extending groove (6) formed in the spherical surface of the inner ring (3), the bottoms of the grooves forming a sliding surface along which the balls are capable of sliding on their flattened side (9), the other spherical side of each ball being partially and movably accommodated in a respective recess (10) forming a part of the housing (1, 2) characterized in that each recess (10) is formed in a respective ball-shaped element (11) which is pivotably accommodated in the housing (1, 2).

2. Homokinetic coupling according to claim 1, characterized in that each ball-shaped element (11) is pivotably accommodated in an opening (12, 13) in the housing (1, 2) and that the grooves (6) in the inner ring (3) have a constant depth.

3. Homokinetic coupling according to claim 1, or 2, characterized in that the recesses (10) in the ball-shaped elements (11) are tapered.

4. Homokinetic coupling according to claim 2, or 3, characterized in that each ball-shaped element (11) is accommodated in a round through opening (12, 13) formed by two half round openings (12, 13) adjacent to one another, the one half (12) of which being formed in a first part (1) of the housing and the other half (13) being formed in a retaining part (2) of the housing, the retaining part (2) being connected with the first part (1) of the housing, the ball-shaped elements (11) being retained in the round openings (12, 13) by a covering ring (15).

**Patentansprüche**

1. Homokinetische Kupplung, bestehend aus einem Gehäuse oder äußeren Ring (1, 2), das einen Hohlraum mit kugelförmiger Oberfläche (5) besitzt und an mindestens einem Ende nach außen hin offen ist, und einem innerhalb des Hohlraums angeordneten inneren Ring (3) mit einer kugelförmigen Oberfläche als Außenfläche und einem Satz Kugeln (8), die auf einer Seite (9) abgeflacht sind und von denen eine jede von ihnen mit ihrer abgeflachten Seite (9) in eine entsprechende sich axial erstreckende Nut (16) aufgenommen ist, welche in die kugelförmige Oberfläche des inneren Rings (3) eingearbeitet ist, wobei die Grundflächen der Nuten Gleitflächen bilden, entlang derer die Kugeln in der Lage sind, mit ihrer abgeflachten Seite (9) zu gleiten, wobei die andere, kugelförmige Seite jeder Kugel zu einem Teil beweglich in einer entsprechenden Vertiefung (10) aufgenommen ist, die ein Teil des Gehäuses (1, 2) bildet, dadurch gekennzeichnet, daß jede Vertiefung (10) in einem eigenen kegelförmigen Element (11) ausgebildet ist, welches drehbar im Gehäuse (1, 2) aufgenommen ist.

2. Homokinetische Kupplung nach Anspruch 1, dadurch gekennzeichnet, daß sich jedes kugelförmige Element (11) schwenkbar in einer Öffnung (12, 13) im Gehäuse (1, 2) befindet und daß die Nuten (6) im inneren Ring (3) eine konstante Tiefe haben.

3. Homokinetische Kupplung nach Anspruch 1 oder 2, dadurch gekennzeichnet, daß die Vertiefungen (10) in den kugelförmigen Elementen (11) kegelig sind.

4. Homokinetische Kupplung nach Anspruch 2 oder 3, dadurch gekennzeichnet, daß jedes kugelförmige Element (11) sich in einer runden durchgehenden Öffnung (12, 13) befindet, die aus zwei aneinander angrenzenden halbrunden Öffnungen (12, 13) besteht, von denen die eine Hälfte (12) sich in einem Teil (1) des Gehäuses und die andere Hälfte (13) sich in einem Aufnahmeteil (2) des Gehäuses befindet, wobei der Aufnahmeteil (2) mit dem ersten Teil des Gehäuses verbunden ist und die kugelförmigen Elemente (11) in den runden Öffnungen (12, 13) durch einen Abdeckring (15) gehalten sind.

**Revendications**

1. Accouplement homocinétique comprenant un logement ou bague extérieure (1, 2) présentant une cavité limitée par une surface sphérique (5) et ouverte vers l'extérieur au moins à l'une de ses extrémités et une bague intérieure (3) placée à l'intérieur de cette cavité, présentant une face extérieure formée d'une surface sphérique, et un jeu de billes (8) aplaties d'un côté (9), logées chacune, du côté aplati (9), dans une gorge correspondante (6) disposée dans le sens axial et creusée dans la surface sphérique de la bague intérieure (3), le fond de ces gorges formant une surface de glissement le long de laquelle les billes peuvent glisser du côté aplati (9), l'autre côté, sphérique, de chaque bille étant logé partiellement et de façon mobile dans un évidement (10) correspondant faisant partie du logement (1, 2) caractérisé en ce que chaque évidement (10) est formé dans un élément correspondant (11) en forme de bille qui est logé, de manière à pouvoir pivoter, dans le logement (1, 2).

2. Accouplement homocinétique suivant la revendication 1, caractérisé en ce que chaque élément (11) en forme de bille est logé, de façon à pouvoir pivoter, dans un orifice (12, 13) prévu dans le logement (1, 2), et en ce que les gorges (6) de la bague intérieure (3) ont une profondeur constante.

3. Accouplement homocinétique suivant l'une des revendications 1 ou 2, caractérisé en ce que les évidements (10) formés dans les éléments (11) en forme de billes, sont coniques.

4. Accouplement homocinétique suivant l'une des revendications 2 ou 3, caractérisé en ce que chacun des éléments (11) en forme de bille est logé dans un orifice rond (12, 13) ouvert aux deux extrémités et formé de deux demi-parties rondes (12, 13) contiguës l'une à l'autre, une demi-partie (12) étant formée dans une première partie (1) du logement tandis que l'autre partie (13) est formée dans une pièce (2) de retenue du logement, la pièce (2) de retenue étant reliée à la première partie (1) du logement, les éléments (11) en forme de billes étant retenus dans les orifices ronds (12, 13) par une bague (15) de couverture.

Fig-1

Fig-2